# EUROPÄISCHE PATENTSCHRIFT

(11) **EP 2 690 417 B1**
(45) Veröffentlichungstag und Bekanntmachung des Hinweises auf die Patenterteilung: **18.04.2018**
(21) Anmeldenummer: 13177385.5
(22) Anmeldetag: 22.07.2013
(51) Int. Cl.: G01K 17/08

(54) **Elektronischer Heizkostenverteiler mit Raumtemperatursensor**
Electronic heating cost distributor with room temperature sensor
Répartiteur électronique de coûts de chauffage avec capteur de température ambiante

(30) Priorität: 23.07.2012 DE 102012014568
(43) Veröffentlichungstag der Anmeldung: 29.01.2014
(73) Patentinhaber: METRONA WÄRMEMESSER UNION GMBH, 81379 München (DE)
(72) Erfinder: Depping, Michael, 83098 Brannenburg (DE); Mertens, Michael, 82110 Germering (DE)
(74) Vertreter: Prinz & Partner mbB

(56) Entgegenhaltungen:
- DE-A1- 4 429 934

## Beschreibung

Die Erfindung betrifft einen elektronischen Heizkostenverteiler, insbesondere einen elektronischen Heizkostenverteiler, der im sogenannten Zweifühler-Messverfahren betrieben werden kann und neben einem Temperatursensor zur Erfassung der Heizkörpertemperatur einen weiteren Temperatursensor zur Erfassung der Raumtemperatur aufweist.

Bei elektronischen Heizkostenverteilern für die verbrauchsabhängige Berechnung von Heizkosten, die der einschlägigen Norm DIN EN 834 entsprechen, werden meistens NTC-Widerstände (Negative Temperature Coefficient Thermistors) als Sensoren zur Temperaturerfassung eingesetzt. Für das eingangs erwähnte Zweifühler-Messverfahren werden zwei Temperatursensoren benötigt, von denen derjenige zur Erfassung der Heizkörpertemperatur auf der Rückseite des Heizkostenverteilers möglichst mit der Heizkörperoberfläche, mindestens jedoch mit der Oberfläche eines auf der entlackten Heizkörperoberfläche angebrachten Metallteils hoher Wärmeleitfähigkeit in Kontakt stehen muss. Der andere Temperatursensor, der zur Erfassung der Raumtemperatur dient, sollte thermisch möglichst gut an die Raumluft gekoppelt sein, die den Heizkostenverteiler auf dessen Vorderseite umgibt. Für die spätere Heizkostenabrechnung werden zyklisch Temperaturdifferenzen zwischen der Heizkörpertemperatur und der Raumtemperatur oder von dieser Differenz abhängige Werte berechnet und aufaddiert, um den Anteil der Wärmeabgabe des jeweiligen Heizkörpers relativ zu den anderen Heizkörpern einer Abrechnungseinheit bestimmen zu können.

Zur Herstellung eines möglichst großen Gefälles (räumlicher Abstand) zwischen der Oberflächentemperatur des Heizkörpers und der Innenseite des Gehäuses des Heizkostenverteilers kommen gemäß dem Stand der Technik verschiedene Befestigungs- oder Anbringungsmöglichkeiten der NTC-Widerstände zum Einsatz:

In der DE 10 2004 023989 A1 wird ein Heizkostenverteiler vorgeschlagen, dessen Temperatursensoren jeweils an den Stirnseiten einer im Inneren des Heizkostenverteilers angeordneten Leiterplatte angebracht sind, wobei die Leiterplatte schräg im länglichen Gehäuse des Heizkostenverteiler verankert ist. Die Sensoren stehen über wärmeleitende, elastische Elemente einerseits mit dem auf der Oberfläche des Heizkörpers befestigten Metallteil, andererseits mit der Gehäusevorderseite des Heizkostenverteilers thermisch in Kontakt.

In dem Heizkostenverteiler gemäß der DE 20 2009 011 309 U1 sind die Temperatursensoren auf einem federndem Trägerrahmen montiert, sodass der raumseitige Sensor in Wärmekontakt mit der vorderen Gehäuseschale steht.

Ebenfalls bekannt aus dem Stand der Technik sind Flüssigkristallanzeigen (LC-Displays) mit integrierten Temperatursensoren. Die US 2007/0097049 A1 beschreibt beispielsweise eine Flüssigkristallanzeige für den Innenraum eines Kraftfahrzeugs mit einem integrierten Temperatursensor, dessen Signal dazu benutzt wird, zusammen mit einem Peltierelement die Temperatur der Anzeige in einem vorgegebenen Bereich zu halten.

In ähnlicher Weise ist in der US 2007/012897 A1 beschrieben, wie ein in eine Flüssigkristallanzeige integrierter Temperatursensor dazu benutzt wird, die Temperatur einer Flüssigkristallanzeige eines Computer-Monitors oder Fernsehers zu kontrollieren und abhängig vom Signal des Temperatursensors Maßnahmen zu ergreifen, um die Temperatur der Anzeige in einem vorgegebenen Bereich zu halten.

Für den gleichen Anwendungsfall zeigt die US 2005/286010 A1 einen in die Lagen einer Flüssigkristallanzeige integrierten Temperatursensor, der die Temperatur der Anzeige messen soll, sowie eine Energiequelle, die die Temperatur der Anzeige durch Auswertung des Signals des Temperatursensors steuern soll.

Aus der DE 44 29 934 A1 ist ein elektronischer Heizkostenverteiler bekannt, bei dem ein Raumluftsensor auf einem flexiblen Steg neben einer LCD-Anzeige befestigt ist. Der flexible Steg ist an den Rahmen der LCD-Anzeige angeformt und drückt den Raumluftsensor flexibel gegen eine am Gehäuse vorgesehene Metallplatte, die von der Raumluft umströmt wird. Eine eigene Zuleitung verbindet den Raumluftsensor mit der elektronischen Schaltungsanordnung der Leiterplatte des Heizkostenverteilers.

Aufgabe der Erfindung ist es, bei einem elektronischen Heizkostenverteiler mit wenigstens zwei Temperatursensoren die Erfassung der Raumtemperatur mit einem der beiden Temperatursensoren in jeder Hinsicht möglichst effektiv zu gestalten.

Gelöst wird diese Aufgabe durch einen elektronischen Heizkostenverteiler mit den Merkmalen des Anspruchs 1. Vorteilhafte und zweckmäßige Ausgestaltungen des erfindungsgemäßen elektronischen Heizkostenverteilers sind in den Unteransprüchen angegeben.

Der erfindungsgemäße elektronische Heizkostenverteiler umfasst ein Gehäuse, in dem ein erster Temperatursensor zur Erfassung der Temperatur einer Heizkörperoberfläche, ein zweiter Temperatursensor zur Erfassung der Raumtemperatur außerhalb des Gehäuses und eine elektronische Anzeigeeinrichtung, insbesondere eine Flüssigkristallanzeige, zur Anzeige eines Zählfortschritts und/oder damit in Verbindung stehender Daten untergebracht sind. Gemäß der Erfindung ist der zweite Temperatursensor auf der elektronischen Anzeigeeinrichtung angebracht und mit Anschlussenden der elektronischen Anzeigeeinrichtung verbunden. (Die Erfassung der Raumtemperatur soll im Sinne der Erfindung auch die Messung einer mit dieser in definiertem Zusammenhang stehende Temperatur umfassen.)

Die Erfindung beruht auf der Erkenntnis, dass der Temperatursensor für eine möglichst effektive Erfassung der Raumtemperatur folgende Kriterien erfüllen sollte:
- Anordnung innerhalb des Gehäuses des Heizkostenverteilers, damit er vor Beschädigung geschützt ist;
- Anordnung in möglichst großem Abstand zum Heizkörper, an dem der Heizkostenverteiler montiert ist;
- möglichst effiziente elektrische Anbindung; und
- möglichst einfache Montage.

Diese Kriterien werden vom erfindungsgemäßen Heizkostenverteiler allesamt erfüllt. Durch die Anbringung auf der Anzeigeeinrichtung ist der zweite Temperatursensor weit entfernt vom Heizkörper und dem Raum, dessen Temperatur erfasst werden soll, sehr nahe, wobei sowohl die Leiterplatte des Heizkostenverteilers als auch durch die Anzeigeeinrichtung selbst als Abschirmung vor dem Einfluss des Heizkörpers dienen können. Eine aufwendige Verdrahtung ist nicht erforderlich, da der zweite Temperatursensor ohne großen Aufwand elektrisch so in die ohnehin vorhandene Schaltung der Anzeigeeinrichtung integriert werden kann, dass die Messwerte an eine Auswerteeinheit auf der Leiterplatte des Heizkostenverteilers übermittelt werden können, ohne dabei die Steuerung der Anzeigeeinrichtung zu stören. Ein weiterer Vorteil der Erfindung besteht darin, dass kein eigener mechanischer Träger für den zweiten Temperatursensor eingebaut werden muss, da die ohnehin vorhandene Anzeigeeinrichtung als Träger genutzt wird.

Eine weitere wichtige Erkenntnis im Zusammenhang mit der erfindungsgemäßen Lösung ist, dass anders als bei den aus dem Stand der Technik bekannten großen Flüssigkristallanzeigen für Monitore, Fernseher, etc., die den integrierten Temperatursensor zur Überwachung der Temperatur der Flüssigkristallanzeige selbst benötigen, bei einem elektronischen Heizkostenverteiler die Eigenerwärmung der einfach aufgebauten Anzeigeeinrichtung keine Rolle spielt, da die Anzeige vergleichsweise klein und lediglich einfarbig ist und außerdem die Darstellung der Anzeige nur relativ selten und geringfügig wechselt. Deshalb beeinflusst beim erfindungsgemäßen elektronischen Heizkostenverteiler die Leistungsabgabe der Anzeigeeinrichtung die Kopplung des zweiten Temperatursensors an die Raumluft, die die Vorderseite des Heizkostenverteilers umgibt, nur unwesentlich, und der zweite Temperatursensor kann - im Gegensatz zu den spezifisch zur Anzeigentemperaturkontrolle eingesetzten Temperatursensoren im fachfremden Stand der Technik - zur Erfassung der Raumtemperatur außerhalb des Gehäuses des Heizkostenverteilers verwendet werden.

Durch die Erfindung entstehen Kostenvorteile im Vergleich zu anderen Lösungen zur Anbringung des zweiten Temperatursensors in einem elektronischen Heizkostenverteiler, da die technologisch bereits bestehenden Leiterstrukturen der Anzeigeeinrichtung genutzt werden können, um die elektrische Verbindung zwischen dem zweiten Temperatursensor und der Leiterplatte des Heizkostenverteilers herzustellen. Sowohl die elektrische Anbindung als auch die mechanische Befestigung des zweiten Temperatursensors können mittels bewährter automatisierter Verfahren in großen Stückzahlen und in hoher Qualität gefertigt werden.

Damit der erfindungsgemäße elektronische Heizkostenverteiler die von ihm erwartete Funktion wie gewohnt erfüllen kann, sollte der in besonderer Weise angeordnete und angebundene zweite Temperatursensor mit einer Auswerteeinheit des Heizkostenverteilers verbunden sein, die so eingerichtet ist, dass sie die Messwerte des zweiten Temperatursensors als Raumtemperatur oder als eine mit dieser in definiertem Zusammenhang stehende Temperatur für eine spätere Heizkostenabrechnung verarbeitet.

Die elektronische Anzeigeeinrichtung ist üblicherweise flach ausgebildet und hat eine Seite, auf der sich die eigentliche Anzeige der Anzeigeeinrichtung befindet. Auf dieser Seite der Anzeigeeinrichtung sollte auch der zweite Temperatursensor montiert sein. Damit ist sichergestellt, dass der zweite Temperatursensor im installierten Zustand des elektronischen Heizkostenverteilers vom Heizkörper abgewandt und dem Raum zugewandt ist. Außerdem ist eine bestmögliche Abschirmung des zweiten Temperatursensors gegen eine mögliche Erwärmung durch den Heizkörper gewährleistet, da sich der zweite Temperatursensor vom Heizkörper aus betrachtet hinter der Leiterplatte und auf der vom Heizkörper abgewandten Seite der Anzeigeeinrichtung befindet.

Die Befestigung des zweiten Temperatursensors auf der Anzeigeeinrichtung erfolgt vorzugsweise mittels eines leitfähigen Klebers. Auf diese Weise können Befestigung und elektrische Anbindung des zweiten Temperatursensors in einem Fertigungsschritt erledigt werden. Bei der bevorzugten Verwendung eines anisotropisch leitfähigen Klebers werden die elektrischen Verbindungen vorteilhaft durch im Klebstoff eingebettete elektrisch leitfähige Mikropartikel hergestellt.

Gemäß der Erfindung ist der zweite Temperatursensor einfach mit bestimmten Anschlussenden der elektronischen Anzeigeeinrichtung verbunden.

Damit die auf der Anzeigeeinrichtung dargestellten Daten für einen Betrachter ablesbar sind, ist der Bereich des Gehäuses des Heizkostenverteilers, der der Anzeigeeinrichtung gegenüberliegt, üblicherweise aus Glas oder einem anderen transparenten Material gebildet, wogegen zumindest der restliche vordere Gehäuseteil üblicherweise aus einem opaken Kunststoff besteht. Obwohl insbesondere Glas eine bessere Wärmeleitfähigkeit als Kunststoff besitzt, kann es trotzdem vorteilhaft sein, zwischen dem zweiten Temperatursensor und der diesem gegenüberliegenden (Glas-)Innenwand des Gehäuses ein elastisches, thermisch leitfähiges Material vorzusehen. Dadurch kann das Temperaturgefälle zwischen der vorderen Außenseite des Gehäuses und dem zweiten Temperatursensor auf der Anzeigeeinrichtung weiter minimiert werden.

Der Wärmeleitfähigkeitskoeffizient des elastischen, thermisch leitfähigen Materials sollte hierfür größer als 0,5 W/m*K und vorzugsweise größer als 1,0 W/m*K sein.

Um den Einfluss der Fremderwärmung des zweiten Temperatursensors durch die Anzeigeeinrichtung weiter zu verringern, ist es vorteilhaft, die Anzeigeeinrichtung so einzurichten, dass sie nicht ständig aktiv ist.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1: einen erfindungsgemäßen elektronischen Heizkostenverteiler; und
- Figur 2: eine perspektivische Ansicht der Anzeigeeinrichtung des elektronischen Heizkostenverteilers aus Figur 1.

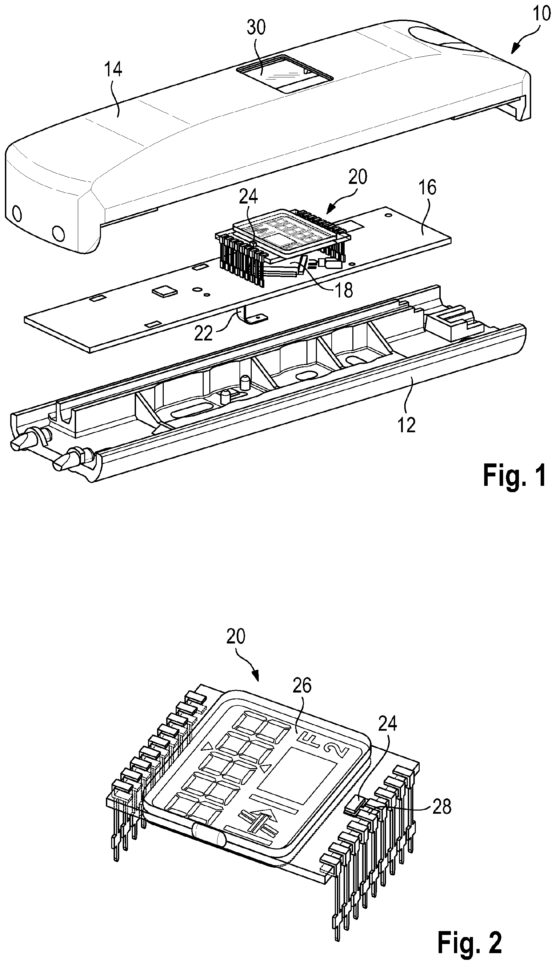

In Figur 1 ist ein elektronischer Heizkostenverteiler 10 gezeigt, der im Zweifühler-Messverfahren gemäß DIN EN 834 betrieben werden kann. Der elektronische Heizkostenverteiler 10 umfasst in bekannter Weise ein metallisches Rückenteil 12 aus einem sehr gut wärmeleitfähigen Material, mit dem der Heizkostenverteiler 10 mechanisch und thermisch an die (entlackte) Oberfläche eines Heizkörpers gekoppelt wird. Auf das Rückenteil 12 ist eine Gehäuseschale 14 aufgesetzt, die aus Kunststoff besteht.

In dem aus dem Rückenteil 12 und der Gehäuseschale 14 gebildeten Gehäuse ist eine Leiterplatte 16 mit einer Steuer- und Auswerteeinheit 18 und einer elektronischen Anzeigeeinrichtung 20 in Form einer Flüssigkristallanzeige untergebracht. Die elektronische Anzeigeeinrichtung 20 ist auf der Leiterplatte 16 des Heizkostenverteilers 10 montiert und elektrisch an die darauf befindliche Schaltung angeschlossen.

Ein erster Temperatursensor 22 zur Erfassung der Temperatur der Heizkörperoberfläche ist thermisch an das Rückenteil 12 gekoppelt. Ein zweiter Temperatursensor 24 zur Erfassung der Raumtemperatur (oder einer mit dieser in definiertem Zusammenhang stehenden Temperatur) ist auf der elektronischen Anzeigeeinrichtung 20 angeordnet, wie später noch genauer erläutert wird. Die beiden Temperatursensoren 22, 24 sind NTC-Widerstände (Heißleiter), wobei grundsätzlich auch andere Sensortypen Verwendung finden können. Im Betrieb des elektronischen Heizkostenverteilers 10 wird bzw. werden auf der Anzeigeeinrichtung 20 der Zählfortschritt und/oder damit in Verbindung stehende Daten angezeigt.

In Figur 2 ist die elektronische Anzeigeeinrichtung 20 des Heizkostenverteilers 10 einzeln und vergrößert gezeigt. Auf der elektronischen Anzeigeeinrichtung 20 ist neben der eigentlichen Anzeige 26 der zweite Temperatursensor 24 zur Erfassung der Raumtemperatur angebracht. Der zweite Temperatursensor 24 befindet sich also zusammen mit der eigentlichen Anzeige 26 auf derjenigen Seite der Anzeigeeinrichtung 20, die im installierten Zustand des elektronischen Heizkostenverteilers 10 vom Heizkörper abgewandt und dem Raum zugewandt ist.

Darüber hinaus ist der zweite Temperatursensor 24 auch elektrisch an die Schaltung der Anzeigeeinrichtung 20 angebunden, wie in Figur 2 zu erkennen ist. Der zweite Temperatursensor 24 ist hierzu mit einem elektrisch leitfähigen Kleber so angebracht, dass er mit bestimmten Anschlussenden 28 (Pins) der elektronischen Anzeigeeinrichtung 20 verbunden ist. Als Kleber dient ein anisotropisch leitfähiger Kleber, d. h. ein Klebstoff, der mit leitfähigen Partikeln versetzt ist.

Um die Wärmeleitfähigkeit zwischen Raumluft und zweitem Temperatursensor 24 weiter zu verbessern, kann zwischen der Innenwand des Gehäuses und dem gegenüberliegenden zweiten Temperatursensor 24 ein elastisches, thermisch leitfähiges Material angeordnet sein (nicht gezeigt), wobei die Innenwand des Gehäuses zumindest in dem Bereich 30, der der eigentlichen Anzeige 18 gegenüberliegt, aus Glas oder einem sonstigen transparenten Material besteht, sodass die auf der Anzeigeeinrichtung 20 dargestellten Werte gut ablesbar sind. Der Wärmeleitfähigkeitskoeffizient des elastischen, thermisch leitfähigen Materials, das beispielsweise ein Silikonelastomer sein kann, sollte größer als 0,5 W/m*K sein und ist idealerweise größer als 1,0 W/m*K.

Im regulären Betrieb eines ordnungsgemäß an einem Heizkörper angebrachten elektronischen Heizkostenverteilers 10, der mit der besonderen Anzeigeeinrichtung 20 einschließlich des darauf angebrachten zweiten Temperatursensors 24 ausgestattet ist, werden vom zweiten Temperatursensor 24 Werte erfasst, die für die Raumtemperatur repräsentativ sind. Diese Werte werden über die elektrische Anbindung der Anzeigeeinrichtung 20 der Auswerteeinheit 18 des Heizkostenverteilers 10 zugeführt und in einer für elektronische Heizkostenverteiler üblichen Weise verarbeitet.

Die Erfassung der Raumtemperaturwerte durch den zweiten Temperatursensor 24 wird durch die Eigenwärme der elektronischen Anzeigeeinrichtung 20 nicht wesentlich beeinflusst. Die elektrische Leistung, die die Anzeigeeinrichtung 20 während ihres Betriebs in Wärme umwandelt, liegt im Bereich einiger weniger µW (Mikrowatt). Für die Erfassung der Raumtemperatur sind solche Leistungsabgaben bezogen auf das kleine Volumen des zweiten Temperatursensors 24 vernachlässigbar. Die Wärmebeeinflussung reduziert sich weiter, wenn die Anzeigeeinrichtung 20 so betrieben wird, dass die Anzeige 26 nicht wie bisher üblich ständig aktiv ist, sondern nur bei Bedarf. Beispielsweise kann vorgesehen sein, dass die Anzeige 26 nur durch Drücken einer Taste aktiviert wird.

Elektronische Heizkostenverteiler 10, die gemäß der obigen Beschreibung mit einer um einen Raumtemperatursensor 24 ergänzten Anzeigeeinrichtung 20 ausgestattet sind, lassen sich mit bekannten Verfahren in hoher Qualität und hohen Stückzahlen im Rahmen einer Serienfertigung herstellen.

### Bezugszeichenliste

- 10: Heizkostenverteiler
- 12: Rückenteil
- 14: Gehäuseschale
- 16: Leiterplatte
- 18: (Steuer-/)Auswerteeinheit
- 20: Anzeigeeinrichtung
- 22: erster Temperatursensor
- 24: zweiter Temperatursensor
- 26: Anzeige
- 28: Anschlussenden
- 30: Bereich der Gehäuseschale

## Patentansprüche

1. Elektronischer Heizkostenverteiler (10), mit einem Gehäuse (12, 14), in dem
ein erster Temperatursensor (22) zur Erfassung der Temperatur einer Heizkörperoberfläche,
ein zweiter Temperatursensor (24) zur Erfassung der Raumtemperatur außerhalb des Gehäuses (12, 14), und
eine elektronische Anzeigeeinrichtung (20), insbesondere eine Flüssigkristallanzeige, zur Anzeige eines Zählfortschritts und/oder damit in Verbindung stehender Daten untergebracht sind,
**dadurch gekennzeichnet, dass** der zweite Temperatursensor (24) auf der elektronischen Anzeigeeinrichtung (20) angebracht und mit Anschlussenden (28) der elektronischen Anzeigeeinrichtung (20) elektrisch verbunden ist.

2. Elektronischer Heizkostenverteiler (10) nach Anspruch 1, **dadurch gekennzeichnet, dass** der zweite Temperatursensor (24) mit einer Auswerteeinheit (18) verbunden ist, die so eingerichtet ist, dass sie die Messwerte des zweiten Temperatursensors (24) als Raumtemperatur oder als eine mit dieser in definiertem Zusammenhang stehende Temperatur für eine spätere Heizkostenabrechnung verarbeitet.

3. Elektronischer Heizkostenverteiler (10) nach Anspruch 1 oder 2, **dadurch gekennzeichnet, dass** die elektronische Anzeigeeinrichtung (20) eine Seite hat, auf der sich die eigentliche Anzeige (18) der Anzeigeeinrichtung (20) befindet, und dass der zweite Temperatursensor (24) auf dieser Seite der Anzeigeeinrichtung (20) montiert ist.

4. Elektronischer Heizkostenverteiler (10) nach einem der vorhergehenden Ansprüche, **dadurch gekennzeichnet, dass** der zweite Temperatursensor (24) mittels eines leitfähigen Klebers, insbesondere eines anisotropisch leitfähigen Klebers angebracht ist.

5. Elektronischer Heizkostenverteiler (10) nach einem der vorhergehenden Ansprüche, **dadurch gekennzeichnet, dass** zwischen dem zweiten Temperatursensor (24) und einer diesem gegenüberliegenden Innenwand des Gehäuses (14) ein elastisches, thermisch leitfähiges Material angeordnet ist.

6. Elektronischer Heizkostenverteiler (10) nach Anspruch 5, **dadurch gekennzeichnet, dass** der Wärmeleitfähigkeitskoeffizient des elastischen, thermisch leitfähigen Materials größer als 0,5 W/m*K und vorzugsweise größer als 1,0 W/m*K ist.

7. Elektronischer Heizkostenverteiler (10) nach einem der vorhergehenden Ansprüche, **dadurch gekennzeichnet, dass** die Anzeigeeinrichtung (20) so eingerichtet ist, dass sie nicht ständig aktiv ist.

## Claims

1. An electronic heat cost allocator (10) comprising a housing (12, 14) which accommodates
a first temperature sensor (22) for sensing the temperature of a radiator surface,
a second temperature sensor (24) for sensing the room temperature outside the housing (12, 14), and
an electronic display device (20), in particular a liquid crystal display, for displaying a counting progression and/or data related thereto,
**characterized in that** the second temperature sensor (24) is mounted on the electronic display device (20) and is electrically connected to terminal ends (28) of the electronic display device (20).

2. The electronic heat cost allocator (10) according to claim 1, **characterized in that** the second temperature sensor (24) is connected to an evaluation unit (18) which is adapted to process the measured values of the second temperature sensor (24) as a room temperature or as a temperature related thereto in a defined manner for a later heat cost billing.

3. The electronic heat cost allocator (10) according to claim 1 or 2, **characterized in that** the electronic display device (20) has a side on which the actual display (18) of the display device (20) is located, and that the second temperature sensor (24) is fitted on this side of the display device (20).

4. The electronic heat cost allocator (10) according to any of the preceding claims, **characterized in that** the second temperature sensor (24) is attached by means of a conductive adhesive, in particular an anisotropically conductive adhesive.

5. The electronic heat cost allocator (10) according to any of the preceding claims, **characterized in that** an elastic, thermally conductive material is arranged between the second temperature sensor (24) and an inner wall of the housing (14) facing it.

6. The electronic heat cost allocator (10) according to claim 5, **characterized in that** the coefficient of thermal conductivity of the elastic, thermally conductive material is greater than 0.5 W/m*K and preferably greater than 1.0 W/m*K.

7. The electronic heat cost allocator (10) according to any of the preceding claims, **characterized in that** the display device (20) is configured so as not to be constantly active.

## Revendications

1. Répartiteur de frais de chauffage électronique (10), présentant un boîtier (12, 14) dans lequel sont logés
un premier capteur de température (22) pour la saisie de la température d'une surface de radiateur de chauffage,
un deuxième capteur de température (24) pour la saisie de la température ambiante à l'extérieur du boîtier (12, 14), et
un moyen d'affichage électronique (20), en particulier un affichage à cristaux liquides pour l'affichage d'une progression de comptage et/ou de données en relation avec celle-ci,
**caractérisé en ce que** le deuxième capteur de température (24) est agencé sur le moyen d'affichage électronique (20) et est électriquement relié à des extrémités de raccordement (28) du moyen d'affichage électronique (20).

2. Répartiteur de frais de chauffage électronique (10) selon la revendication 1, **caractérisé en ce que** le deuxième capteur de température (24) est relié à une unité d'évaluation (18) qui est aménagée de manière à traiter les valeurs mesurées du deuxième capteur de température (24) en tant que température ambiante ou en tant que température en rapport défini avec celle-ci pour une facturation de frais de chauffage ultérieure.

3. Répartiteur de frais de chauffage électronique (10) selon la revendication 1 ou 2, **caractérisé en ce que** le moyen d'affichage électronique (20) présente un côté, l'affichage (18) effectif du moyen d'affichage (20) se trouvant de ce côté, et **en ce que** le deuxième capteur de température (24) est monté de ce côté du moyen d'affichage (20).

4. Répartiteur de frais de chauffage électronique (10) selon l'une des revendications précédentes, **caractérisé en ce que** le deuxième capteur de température (24) est fixé au moyen d'une colle conductrice, en particulier d'une colle conductrice de manière anisotrope.

5. Répartiteur de frais de chauffage électronique (10) selon l'une des revendications précédentes, **caractérisé en ce qu'**une matière élastique thermiquement conductrice est agencée entre le deuxième capteur de température (24) et une paroi intérieure du boîtier (14) opposée à celui-ci.

6. Répartiteur de frais de chauffage électronique (10) selon la revendication 5, **caractérisé en ce que** le coefficient de conductivité thermique de la matière élastique thermiquement conductrice est supérieur à 0,5 W/m*K et de préférence supérieur à 1,0 W/m*K.

7. Répartiteur de frais de chauffage électronique (10) selon l'une des revendications précédentes, **caractérisé en ce que** le moyen d'affichage (20) est aménagé de manière à ne pas être constamment actif.
